# EUROPÄISCHE PATENTSCHRIFT

(11) **EP 3 768 902 B1**
(45) Veröffentlichungstag und Bekanntmachung des Hinweises auf die Patenterteilung: **09.11.2022**
(21) Anmeldenummer: 19721288.9
(22) Anmeldetag: 02.05.2019
(51) Int. Cl.: E02F 9/26, G01B 11/00, G06T 17/00, B33Y 50/00, B29C 64/00, E02F 9/20, B22F 10/20, B22F 7/06, B33Y 10/00, B33Y 30/00, B33Y 80/00, G01B 11/02

(54) **VERFAHREN UND VORRICHTUNG ZUM WARTEN UND/ODER REPARIEREN EINER BAUMASCHINE**
METHOD AND DEVICE FOR MAINTAINING AND/OR REPAIRING A CONSTRUCTION MACHINE
PROCÉDÉ ET DISPOSITIF DE MAINTENANCE ET/OU DE RÉPARATION D'UN ENGIN DE CONSTRUCTION

(30) Priorität: 04.05.2018 DE 102018110742
(43) Veröffentlichungstag der Anmeldung: 27.01.2021
(73) Patentinhaber: Liebherr-Werk Biberach GmbH, 88400 Biberach an der Riss (DE)
(72) Erfinder: BRAMBERGER, Robert, 88400 Biberach an der Riss (DE); KÖGL, Martin, 88400 Biberach an der Riß (DE)
(74) Vertreter: Thoma, Michael
(86) Internationale Anmeldenummer: PCT/EP2019/061281
(87) Internationale Veröffentlichungsnummer: WO 2019/211393

(56) Entgegenhaltungen:
- EP-A1- 1 281 656
- EP-A1- 2 626 476
- EP-A1- 2 641 661
- EP-A1- 3 296 412
- US-A1- 2014 076 985
- US-B2- 9 370 792
- Thingiverse.Com: "Excavator tracks by microcut - Thingiverse", , 1. Februar 2014 (2014-02-01), XP055601377, Gefunden im Internet: URL:https://www.thingiverse.com/thing:2393 21 [gefunden am 2019-07-02]
- Rafael Radkowski: "Augmented REality Assembly Demo", , 6. Januar 2016 (2016-01-06), Seiten 1-2, XP054979621, Gefunden im Internet: URL:https://www.youtube.com/watch?v=VTBYPy WVEsE&list=PLf1SOhOBL3stA3vx1oHAY3SIQtbrzN 77l&index=2&t=104s [gefunden am 2019-08-27]
- Motor.TV: "AUDI Future Smart Factory / Drones , Virtual Reality and 3D Printing", , 21. November 2016 (2016-11-21), Seiten 1-4, XP054979622, Gefunden im Internet: URL:https://www.youtube.com/watch?v=ZkjVk3 XS0J0&list=PLf1SOhOBL3stA3vx1oHAY3SIQtbrzN 77l&index=2 [gefunden am 2019-08-27]

## Beschreibung

Die vorliegende Erfindung betrifft eine Vorrichtung sowie ein Verfahren zum Warten und/oder Reparieren einer Baumaschine, mit einer Wartungsstation umfassend einen 3D-Drucker zum Drucken von Ersatzteilen anhand von Bauteildaten und/oder eine mobile Anzeigevorrichtung zum Anzeigen von Reparaturinformationen an der Baumaschine anhand von Bauteildaten, wobei eine Datenversorgungsstation, die über eine Kommunikationsverbindung mit der Wartungsstation verbindbar ist, der Wartungsstation Bauteildaten zum Drucken eines Ersatzteils und/oder Anzeigen von Reparaturinformationen zu dem Bauteil bereitstellt.

Solche Reparaturvorrichtungen mit 3D-Druckern zeigen beispielsweise die Schriften EP 32 96 412 A1, US 2014/076985 A1 und EP 26 41 661 A1. Weitere 3D-Drucker mit Anbindung an ein Computer-, insbesondere CAD-System zeigen die Schriften Thingiverse.Com: "Excavator tracks by microcut - Thingiverse", 1.2.2014, XP 055601377, sowie US 9 370 792 B2.

Ferner sind Reparaturstationen mit Augmented Reality-Bausteinen aus den Schriften Rafael Radkowski: "Augmented Reality Assembly Demo", 6.1.2016, Seiten 1-2, XP 054979621, oder Motor.TV: "AUDI Future Smart Factory / Drones, Virtual Reality and 3D Printing", 21.11.2016, Seiten 1-4, XP 054979622, oder EP 26 26 476 A1 bekannt.

Die Reparatur und Wartung von Baumaschinen wie zum Beispiel Kranen, Baggern, Planierraupen und Rammgeräten ist in zeitlicher und geographischer Hinsicht oft aufwändig und anspruchsvoll. Da auf Baustellen die verschiedenen Baumaschinen in ihrem Zusammenspiel voneinander abhängen, kann ein ausfallendes Gerät oft die ganze Baustelle lahmlegen, obwohl die übrigen Baumaschinen an sich funktionstüchtig wären. Fällt beispielsweise der Kran aus, können Anlieferungen wie Ziegel oder Armierungen nicht abgeladen bzw. an den Einsatzort gebracht werden oder ein Rammgerät nicht mit Spuntträgern versorgt werden. Es werden daher von Maschinenbetreibern oder auch -herstellern regelmäßig sehr kurze Reaktionszeiten gefordert und vertraglich vereinbart, um einen teuren Stillstand der gesamten Baustelle zu vermeiden. Andererseits sind Baustellen oft weit vom Maschinenbetreiber oder -hersteller entfernt, oft sogar auf anderen Kontinenten eingesetzt, und bisweilen an schwer erreichbaren oder gar unzugänglichen Orten, die keine günstige Flughafenanbindung besitzen, um Ersatzteile rasch vor Ort zu liefern. Insofern werden oft teure Spezialtransporte benötigt, um ein Ersatzteil oder auch hochqualifiziertes, spezialisiertes Wartungspersonal vor Ort zu bringen. Auch wenn Maschinenführer wie beispielsweise Kranführer mit ihren Baumaschinen vertraut und auch technisch qualifiziert sind, erfordert die Wartung und Reparatur doch oft Spezialkenntnisse, die es notwendig machen, auf das spezielle Gerät spezialisierte Servicetechniker zum Betriebsort anreisen oder gar einfliegen zu lassen.

Es wurde daher bereits angedacht, einen Kran per Datenkommunikationsverbindung an eine Fernwartungsstelle anzubinden, um von der Fernwartungsstelle her Betriebsdaten vom Kran abzufragen und Datensätze von der Fernwartungsstelle her am Kran einzuspielen, beispielsweise in Form von Softwareupdates oder Parametrisierungen, vgl. EP 1 281 656 A1.

In der EP 2 570 380 B1 wird weiterhin vorgeschlagen, von einem Fernwartungsrechner aus über eine Mobilfunkverbindung auf einen Tabletcomputer eine Wartungsanforderung zu übertragen, der dann über eine Bluetooth-Verbindung Betriebsparameter von der Steuereinheit des Krans abfrägt. Bei Bedarf kann der Fernwartungsrechner über das zwischengeschaltete Mobiltelefon bzw. den Tabletcomputer Korrekturdaten beispielsweise zum Anpassen der Parametrisierung des Krans auf den Kranrechner übertragen.

Solche bekannten Fernwartungssysteme ermöglichen es bislang jedoch nur, die Steuerungssoftware des Krans zu warten und ggfs. abzuändern. Es können jedoch keine mechanischen Bauteile der Baumaschine repariert, aus- und eingebaut oder ersetzt werden. Zudem können auch keine Montagefehler wie beispielsweise falsch eingesetzte oder falsch gesicherte Umlenkrollen korrigiert werden. Zudem leiden diese bisherigen Fernwartungssysteme daran, dass sie die an sich notwendige Anbindung verschiedener Systemteilnehmer nicht ermöglichen oder, wenn sie es ermöglichen, die notwendige Datensicherheit nicht gewährleisten. Regelmäßig sind Maschinenhersteller nicht bereit, sensible Konstruktionsdaten unabhängigen Drittfirmen bereitzustellen, die beispielsweise die Wartung verschiedener Baumaschinen anbieten, sodass ein Baustellenbetreiber verschiedene, individuelle Datenzugänge zu verschiedenen Herstellern benötigen würde, um Wartungsdaten für Baumaschinen verschiedener Hersteller zu erhalten. Dies stößt jedoch auf mangelnde Akzeptanz. Andererseits werden zum Teil sehr detaillierte Bauteildaten zu verschiedensten Bauteilen benötigt, da im Betrieb unvorhergesehene Bauteilausfälle passieren können und insofern verschiedenste Teile ersetzt werden müssen.

Der vorliegenden Erfindung liegt daher die Aufgabe zugrunde, eine schnelle und verlässliche Wartung und Reparatur verschiedener Bauteile verschiedener Baumaschinen vor Ort auf einer Baustelle zu ermöglichen, ohne hierfür speziell geschulte, für den jeweiligen Maschinentyp versierte Servicetechniker zu benötigen, und dabei trotzdem die Preisgabe sensibler Know-how-Aspekte zu verhindern.

Erfindungsgemäß wird die genannte Aufgabe durch eine Vorrichtung gemäß Anspruch 1 sowie eine Verfahren gemäß Anspruch 14 gelöst. Bevorzugte Ausgestaltungen der Erfindung sind Gegenstand der abhängigen Ansprüche.

Nach einem ersten Aspekt wird vorgeschlagen, bei Auftreten eines mechanischen Reparaturfalls ein benötigtes, mechanisches Ersatzteil der Baumaschine nicht mehr vom Baumaschinenhersteller oder einem weit entfernten Ersatzteillager anliefern zu lassen, sondern vor Ort bzw. in der Nähe der Betriebsstätte der Baumaschine mittels eines 3D-Druckers zu drucken. Die hierfür benötigten, relativ umfangreichen 3D-Druckdaten, die dem 3D-Drucker das Drucken des jeweiligen Ersatzteils ermöglichen, werden dem 3D-Drucker bzw. der Wartungsstation, zu der der 3D-Drucker gehört, über eine zumindest zweistufige Datenkommunikationsstruktur bereitgestellt, welche unterschiedliche Authentifizierungs- und Auswahlschritte vorsieht und auf verschiedenen Ebenen der Datenstruktur unterschiedliche Datenmengen bereithält. Auf einer ersten Datenstrukturebene werden Bauteildaten zu einer Vielzahl von Bauteilen einer oder mehrerer Baumaschinen gespeichert bzw. bereitgehalten, wobei auf dieser ersten Ebene mehrere Maschinendatenstationen vorgesehen sein können, die solche Bauteildaten zu verschiedenen Baumaschinen verschiedener Hersteller bereithalten können. Auf diese erste Datenstrukturebene hat jedoch nicht der einzelne Wartungsmechaniker vor Ort oder die genannte lokale Wartungsstation Zugriff, sondern nur eine zwischengeschaltete Datenversorgungsstation, die einerseits über eine Kommunikationsverbindung mit der Wartungsstation verbindbar ist und dieser Wartungsstation benötigte Bauteildaten bereitstellt, sowie andererseits über eine Kommunikationsverbindung mit der Maschinendatenstation auf der zuvor genannten ersten Ebene kommunizieren und dort benötigte Bauteildaten erhalten kann. Durch die zumindest eine zwischengeschaltete Kommunikationsebene umfassend die genannte Datenversorgungsstation bleibt für die Wartungsstation der Speicherort der sensiblen Bauteildaten verborgen. Trotzdem kann die Wartungsstation Zugriff auf Bauteildaten verschiedenster Bauteile und/oder verschiedener Baumaschinen erhalten, ohne hierfür verschiedene Kommunikationskanäle bereithalten oder bei verschiedenen Herstellern angemeldet zu sein. Dies verbessert einerseits die Datensicherheit, andererseits wird die Attraktivität des Systems für den Baustellenbetreiber erhöht.

Um die Sicherheit zu erhöhen, können die verschiedenen Stufen mit verschiedenen Sicherheitscodes und/oder Zertifikatsprüfungen miteinander kommunizieren. Insbesondere kann die Wartungsstation einen Anforderungsbaustein zum Anfordern von Bauteildaten zu einem bestimmten Bauteil einer bestimmten Baumaschine bei der Datenversorgungsstation besitzen, welcher Anforderungsbaustein zusammen mit der Bauteildaten-Anforderung eine Kennung und/oder einen Schlüssel an die Datenversorgungsstation überträgt bzw. auf Abfrage bereithält. Ein Authentifizierungsbaustein in der Datenversorgungsstation kann die von der Wartungsstation her erhaltene Kennung und/oder den übertragenen Schlüssel prüfen und/oder entschlüsseln um zu bestimmen, ob die Wartungsstation autorisiert ist, die angeforderten Bauteildaten auch zu erhalten, oder überhaupt auch nur autorisiert ist, mit der Datenversorgungsstation Daten auszutauschen. Ist diese Authentifizierungs-Überprüfung seitens der Datenversorgungsstation positiv, das heißt ist die Wartungsstation autorisiert, die genannten Bauteildaten anzufordern, wählt die Datenversorgungsstation anhand der erhaltenen Bauteildaten-Anforderung von der Wartungsstation die hierfür relevante Maschinendatenstation aus und fordert von dieser die benötigten Bauteildaten an.

Die Anfrage der Datenversorgungsstation an die Maschinendatenstation kann wiederum mit einem zweiten Authentifizierungsschritt einhergehen, wobei die Datenverarbeitungsstation eine Kennung und/oder einen Schlüssel an die Maschinendatenstation übertragen oder an diese auf Abruf bereitstellen kann. Ein Authentifizierungs- und/oder Entschlüsselungsbaustein der Maschinendatenstation kann die übertragene Kennung und/oder den übertragenen Schlüssel auf die Berechtigung hin überprüfen und/oder entschlüsseln, um zu bestimmen, ob die Datenversorgungsstation berechtigt ist, die angeforderten Bauteildaten zu erhalten oder auch überhaupt nur mit der Maschinendatenstation zu kommunizieren.

Stellt die Maschinendatenstation fest, dass die Datenverarbeitungsstation autorisiert ist, die angeforderten Bauteildaten zu erhalten, stellt die Maschinendatenstation die genannten Bauteildaten bereit bzw. überträgt diese Bauteildaten auf die Datenversorgungsstation, welche dann wiederum die erhaltenen Bauteildaten an die Wartungsstation übertragen kann. Die Maschinendatenstation, die eine Vielzahl verschiedener Bauteildaten abspeichert, kann anhand der erhaltenen Anfrage von der Datenversorgungstation her einen jeweiligen Datensatz aus dem gespeicherten Fundus auswählen, sodass der Datenversorgungstation nur die jeweils tatsächlich benötigten Bauteildaten bereitgestellt werden.

Die in der genannten Weise auf die Wartungsstation übertragenen Bauteildaten können insbesondere 3D-Druckdaten umfassen und/oder Bauteilgeometriedaten umfassen, anhand derer die Wartungsstation 3D-Druckdaten erzeugen kann, anhand welcher 3D-Druckdaten der genannte 3D-Drucker dann das jeweilige Ersatzteil drucken kann.

Ein solcher 3D-Drucker ist dazu ausgebildet, anhand der empfangenen Bauteildaten und der daraus abgeleiteten und/oder darin enthaltenen 3D-Druckdaten das jeweilige Bauteil bzw. Ersatzteil schichtweise aufzubauen, wobei mittels eines Energiestrahls Werkstoffschichten nacheinander schichtweise verflüssigt und/oder verfestigt werden können. Beispielsweise können ein oder mehrere Werkstoffe pulverförmig und/oder pastös und/oder flüssig schichtweise aufgetragen und durch einen Laserstrahl oder Elektronenstrahl oder Plasmastrahl entsprechend schichtweise aufgeschmolzen oder verfestigt und/oder ausgehärtet und/oder zur chemischen Reaktion gebracht werden, um jeweils eine ausgehärtete Schicht zu bilden. Durch eine solche Herstellung im 3D-Druckverfahren kann das für die Reparatur bzw. Wartung jeweils benötigte Ersatzteil direkt bzw. nahe am Einsatzort der Baumaschine gefertigt werden, wodurch Transportkosten drastisch reduziert werden können, da nicht mehr das jeweilige Ersatzteil teuer von einem Zentrallager angeliefert oder gar eingeflogen werden muss, sondern lediglich noch die für den 3D-Drucker benötigten Fertigungsdaten übertragen werden.

Die 3D-Druckdaten können dazu verwendet werden, direkt an der Baustelle bzw. dem Einsatzort der Baumaschine einfache Ersatzteile wie beispielsweise Rollen, Zahnräder, Bolzen oder Winkel kostengünstig und schnell zu drucken, ohne dass viel Zeit für die Ersatzteillieferung verloren geht. Andererseits können aber auch komplexere Ersatzteile für Motoren, Winden, Hydraulikzylinder, Antriebe, Schaltschränke oder andere Unterbaugruppen einer Baumaschine gedruckt werden.

Um gerade bei komplexeren Ersatzteilen durch den dann länger dauernden 3D-Druckvorgang keine Stillstands- bzw. Ausfallzeiten zu haben, kann die Bereitstellung der 3D-Druckdaten für ein bestimmtes Bauteil auch durch ein Ausfall-Vorhersagesystem ausgelöst bzw. in Abhängigkeit eines Austauschreifesignals gesteuert werden, welches in Abhängigkeit von erfassten Betriebsdaten und/oder erfassten bzw. bestimmten Bauteilcharakteristika generiert werden kann. Hierzu kann die genannte Wartungsstation, alternativ oder zusätzlich aber auch die Datenversorgungsstation und/oder die Maschinendatenstation und/oder die Steuervorrichtung der jeweiligen Baumaschine, an eine Wartungseinrichtung angebunden sein, in der lebensdauerrelevante Betriebsdaten und/oder Charakteristika der Baumaschine und/oder deren Bauteile gesammelt und ausgewertet werden, um die Lebensdauer abzuschätzen bzw. vorherzusagen und in Abhängigkeit der gesammelten Daten ein Austauschreife-Signal zu generieren, welches die Austauschreife eines jeweiligen Bauteils so rechtzeitig angibt, dass Zeit für einen 3D-Druckvorgang bzw. eine anderweitige Ersatzteilbeschaffung besteht. Insbesondere kann die genannte Wartungsstation bei Vorliegen des Austauschreife-Signals eine Übermittlung der 3D-Druckdaten an den 3D-Drucker veranlassen und/oder anfordern. Der 3D-Druckprozess kann dann so rechtzeitig veranlasst werden, dass das Ersatzteil bereitsteht, wenn das Original- bzw. Altteil auszufallen droht.

Alternativ zum Einspielen der 3D-Druckdaten von der Datenversorgungsstation bzw. der Maschinendatenstation her kann ggf. auch ein zu ersetzendes Bauteil vor Ort durch einen 3D-Scanner abgetastet und eingescannt werden, um dann anhand der 3D-Scandaten des defekten bzw. verschlissenen Bauteils den 3D-Drucker anzusteuern und das Ersatztteil zu drucken.

Nach einem weiteren Aspekt können in der zuvor erläuterten Weise unter Zwischenschaltung der Datenverarbeitungsstation von einer Maschinendatenstation an die Wartungsstation auch Bauteildaten übertragen werden, die Reparaturinformationen enthalten, um an der eingangs genannten, mobilen Anzeigevorrichtung der Wartungsstation anhand der übertragenen Bauteildaten Reparaturinformationen anzuzeigen. Solche Reparaturinformationen können beispielsweise Anweisungen zu den vorzunehmenden Ein- und/oder Ausbauschritten zum Ein- und/oder Ausbau eines Ersatzteils umfassen, beispielsweise in Form von Text- und/oder Bildanweisungen. Insbesondere können solche Reparatur- und/oder Wartungsinformationen auch eine Bild- und/oder Zeichnungsdarstellung des zu reparierenden bzw. zu wartenden Bauteils und der Bauteil- und Einbauumgebung des genannten Bauteils umfassen, um dem lokalen Wartungsmechaniker die Reparatur bzw. Wartung anschaulich zu visualisieren.

Insbesondere kann in ein solches Bild oder eine solche Zeichnung der Einbauumgebung die Position und/oder Ausrichtung des zu reparierenden bzw. zu wartenden Bauteils eingeblendet werden.

Die genannte mobile Anzeigevorrichtung kann beispielsweise ein Tablet oder einen in anderer Weise tragbaren Bildschirm umfassen. Alternativ oder zusätzlich kann die Anzeigevorrichtung insbesondere aber auch eine Augmented Reality-Einrichtung umfassen, die auf einem Display ein Bild des zu wartenden und/oder zu reparierenden Bauteils und/oder dessen Einbauumgebung anzeigt und ggfs. ergänzende Reparaturinformationen beispielsweise in Form einer Textinformation in das Bild einblendet.

Ein solches Augmented Reality-System ist ein computergestütztes Bilddarstellungssystem, mittels dessen ein Bild der Bauteil-Einbauumgebung mit computergenerierten Zusatzinformationen überlagert wird.

In vorteilhafter Weiterbildung der Erfindung kann das auf dem Display angezeigte Bild der Bauteil-Einbauumgebung ein Livebild oder auch ein aufgezeichnetes Bild sein, das von einer auf die zu montierende Bauteil-Einbauumgebung gerichteten Kamera bereitgestellt wird. Der Vorteil der Verwendung eines Livebilds, das jeweils den aktuellen Montagezustand wiedergibt, ist ein erleichterter Abgleich zwischen tatsächlicher Realität und der im Bild angezeigten Realität, so dass sich der Werker letztlich leichter zurechtfindet. Gegebenenfalls kann das Bild aber auch zwischengespeichert oder aufgezeichnet und dem Werker zeitversetzt angezeigt werden. Alternativ oder zusätzlich zu einem von einer vorzugsweise digitalen Kamera bereitgestellten Ist-Bild der Bauteil-Einbauumgebung kann ggf. auch ein computergeneriertes, virtuelles Bild der Bauteil-Einbauumgebung angezeigt werden, wobei ein solches virtuelles Bild der Bauteil-Einbauumgebung beispielsweise von einem dreidimensionalen CAD-System bereitgestellt werden kann, das die Komponenten und deren Anordnung zeigt.

Das auf dem Display angezeigte Bild kann dabei ein ständig aktuell den Ist-Zustand der Bauteil-Einbauumgebung wiedergebendes Livebild nach Art eines Fernsehbilds sein. Alternativ kann auch ein nur in größeren Zeitabständen von beispielsweise einigen Sekunden aktualisiertes Standbild angezeigt werden, das den Ist-Zustand der Bauteil-Einbauumgebung sozusagen einfriert und die Detailbeobachtung durch weniger Veränderungen erleichtert. Beispielsweise kann auch ein nur im Rhythmus der Arbeitsschritte aktualisiertes Standbild angezeigt werden, das zyklisch oder nach jedem erfolgten Reparatur- bzw. Montageschritt aktualisiert und auf dem Display angezeigt wird.

Das dem Werker angezeigte Bild der Bauteil-Einbauumgebung wird also vorteilhafterweise ständig oder zyklisch dem fortschreitenden Reparatur- bzw. Wartungszustand der Bauteil-Einbauumgebung angepasst. Während zu Beginn der Reparatur der Bauteil-Einbauumgebung ein vollständiges Bild der Bauteil-Einbauumgebung mit den "alten", zu reparierenden Komponenten angelegt wird, kann in einem Zwischenstadium nach Ausbau der zu reparierenden Komponente und evtl. mitanzubauenden Nachbarkomponenten ein reduziertes Bild der Einbauumgebung mit nur wenigen Grundkomponenten wie Trägerrahmen und/oder noch ohne zu montierende Ersatzbauteile angezeigt werden kann, wobei dann mit fortschreitendem Wiederzusammenbau mit zunehmendem Fortgang der Montage ein immer reicheres Bild der Bauteil-Einbauumgebung angezeigt und gegen Ende des Montagevorgangs ein Bild der Bauteil-Einbauumgebung mit immer mehr Bauteilen und Verbindungen untereinander angezeigt werden kann. Das genannte Anpassen des angezeigten Bilds an den fortschreitenden Reparaturzustand kann in der genannten Weise durch Anzeigen eines Live-Bilds oder eines gespeicherten, zuvor aufgenommenen Echtbilds realisiert sein. Alternativ oder zusätzlich kann das Bild, beispielsweise ein computergeneriertes Konstruktionsbild und/oder ein durch eine Kamera aufgenommenes Bild, in Abhängigkeit der identifizierten und montierten Bauteile nach und nach verändert werden, beispielsweise dergestalt, dass bei richtig montierten Bauteilen diese computergestützt in das anzuzeigende Bild eingebaut werden. Das dem Werker angezeigte Bild verändert sich somit vorteilhafterweise und ist an den tatsächlichen Zustand der Baumaschine angepasst.

Das genannte Bild der Bauteil-Einbauumgebung, in das die zu reparierenden Komponenten und deren Anschlusspunkte eingeblendet werden, kann grundsätzlich auf verschiedenen Displays angezeigt werden. Beispielsweise kann als Display ein neben der Baumaschine stehender Bildschirm oder ein zumindest in der Nachbarschaft zur Bauteil-Einbauumgebung positionierter Bildschirm verwendet werden, auf dem das genannte Bild angezeigt wird.

In vorteilhafter Weiterbildung der Erfindung kann das Bild der Bauteil-Einbauumgebung auch auf einer Datenbrille angezeigt werden, die der jeweilige Werker beim Montieren tragen kann. Eine solche Datenbrille kann beispielsweise ein im Bereich eines üblichen Brillenglases positionierbares Display umfassen, welches beispielsweise am Brillenrahmen verschwenkbar gelagert sein kann, um vor das Auge oder vom Auge weggeschwenkt werden zu können. Alternativ oder zusätzlich kann das Display auch nach Art eines Head-up-Displays arbeiten, das das Bild auf das Brillenglas projizieren kann, durch das der Werker hindurchsehen kann. Solche Datenbrillen sind per se bekannt und beispielsweise in den Schriften DE 20 2012 003 317 U1 oder DE 20 2012 003 332 U1 beschrieben, auf die insoweit bezüglich der Ausbildung der Datenbrille verwiesen werden darf.

Um die Anschlusspunkte der zu ersetzenden bzw. einzubauenden Bauteile und deren Soll-Position in dem Bild der Bauteil-Einbauumgebung anzeigen zu können, kann das genannte Augmented Reality-System bzw. das computergestützte Bildgenerierungssystem vorteilhafterweise eine CAD-Schnittstelle aufweisen, um die Anschlusspunkte der zu reparierenden bzw. einzubauenden Bauteile und deren Sollposition in der Bauteil-Einbauumgebung aus einem CAD-System zu entnehmen, an das das Augmented Reality-System angebunden werden kann. Ein solches CAD-System kann beispielsweise die Zusammenbau-Zeichnung der Bauteil-Einbauumgebung speichern oder insbesondere auch das CAD-System sein, auf dem die Bauteil-Einbauumgebung und/oder deren Zusammenbau-Zeichnung generiert wurde. Alternativ zu einer direkten Anbindung an das genannte CAD-System kann dem Augmented Reality-System vorteilhafterweise aber auch ein CAD-Datensatz zugeführt werden, der die Bauteil-Einbauumgebung und/oder deren Zusammenbau-Zeichnung wiedergibt, wobei ein solcher CAD-Datensatz vorteilhafterweise in der zuvor beschriebenen, mehrstufigen Weise zugeführt werden kann, wofür das Augmented Reality-System bzw. die Wartungsstation eine entsprechende Schnittstelle aufweisen kann.

Vorteilhafterweise kann mittels des Augmented Reality-Systems bzw. dessen Einblendvorrichtung in das auf dem Display angezeigte Bild der Bauteil-Einbauumgebung nicht nur der Anschlusspunkt eines Bauteils, sondern auch dessen Position und/oder dessen Ausrichtung und/oder dessen Montagestellung in der Bauteil-Einbauumgebung angezeigt bzw. eingeblendet werden, so dass ein Werker auch sehen kann, wo genau in der Bauteil-Einbauumgebung das jeweilige Bauteil zu positionieren und zu montieren ist. Dabei kann die von der Kamera aufgenommene Ist-Position und/oder Ist-Ausrichtung des Bauteils und/oder die Ist-Position dessen Anschlusspunkts auf dem Display mit der entsprechenden Soll-Position und/oder Soll-Ausrichtung, die aus den CAD-Daten gewonnen oder der genannten CAD-Datei entnommen werden kann, überblendet werden, um Abweichungen der montierten Ist-Position bzw. Ist-Ausrichtung mit der Soll-Position bzw. Soll-Ausrichtung zu verdeutlichen.

Erfindungsgemäß weist die Wartungsstation eine Identifiziereinrichtung auf, mittels derer ein zu reparierendes bzw. zu wartendes oder zu ersetzendes Bauteil automatisiert identifiziert werden kann, wobei eine solche Identifiziereinrichtung auf verschiedene Ebenen der zuvor schon erläuterten Datenstruktur aufgeteilt sein kann, insbesondere dergestalt, dass ein Identifzierbaustein Charakteristika eines zu reparierenden bzw. zu wartenden Bauteils vor Ort an der Baumaschine bestimmt und die Auswertung dieser bestimmten Charakteristika dann auf einer anderen Ebene, beispielsweise der zuvor genannten zweiten Ebene der Datenversorgungsstation und/oder der ersten Ebene der Maschinendatenstation erfolgt, beispielsweise mittels einem Auswertebaustein, der in der genannten Versorgungsstation und/oder in der Maschinendatenstation vorgesehen oder jeweils daran angebunden sein kann.

Beispielsweise können die an der Wartungsstation bestimmten Charakteristika zusammen mit der Anforderung von Bauteildaten an die Datenversorgungsstation und/oder die Maschinendatenstation übertragen und von dem genannten Auswertebaustein ausgewertet werden.

Die Identifiziereinrichtung zum Identifizieren eines jeweils anzuschließenden Bauteils kann grundsätzlich verschieden ausgebildet sein. Beispielsweise kann das zu identifizierende - reparaturbedürftige, ggf. zu ersetzende und/oder das einzubauende - Bauteil anhand einer am Bauteil angebrachten Markierung beispielsweise in Form eines Strichcodes und/oder eines Buchstaben- oder Zahlencodes und/oder eines anderen Zeichencodes und/oder einer geometrischen Formmarkierung identifiziert werden. Beispielsweise kann die Identifiziereinrichtung hierzu einen Barcode,- bzw. QR-Codeleser aufweisen. Alternativ oder zusätzlich kann aber auch eine Identifizierung in anderer Weise erfolgen, beispielsweise mittels eines RFID-Chips.

Erfindungsgemäß wird das reparierende und/oder zu wartende Bauteil auch mittels einer Bildauswerteeinrichtung identifiziert, die das Bauteil anhand seiner Kontur und/oder Größe und/oder Farbe und/oder Oberflächenbeschaffenheit wie Licht reflektierend, verspiegelt etc. identifizieren kann. Dabei wertet die Bildauswerteeinrichtung die Bilddaten aus, die von der die Bauteil-Einbauumgebung beobachtenden Kamera bereitgestellt werden.

Alternativ oder zusätzlich kann ein jeweiliges Bauteil auch anhand seiner Abmessungen seiner Haupterstreckungsachsen und/oder seines Durchmessers und/oder seiner Geometrie von der Identifiziereinrichtung identifiziert werden.

Hierdurch wird es in Weiterbildung der Erfindung ermöglicht, dass der Werker ein jeweils zu reparierendes oder zu ersetzendes Bauteil einfach bzw. in das Kamerafeld der die Bauteil-Einbauumgebung beobachtenden Kamera bzw. in den Scanbereich einer Scaneinrichtung hält, bevor das Bauteil tatsächlich ersetzt bzw. verbaut wird. Die Bildauswerteeinheit kann dann in dem von der Kamera bereitgestellten Bild das dort gezeigte Bauteil anhand eines der vorgenannten Kriterien wie beispielsweise einem Strich- oder QR-code oder dergleichen identifizieren.

In Weiterbildung der Erfindung kann mit Hilfe des Augmented Reality-Systems auch eine Überwachung einzelner oder aller Wartungs- bzw. Reparaturschritte vorgenommen werden. Hierbei kann das von der Kamera des Augmented Reality-Systems aufgenommene Ist-Bild der Anordnung der Komponenten mit der Soll-Anordnung der Komponenten, wie sie aus den CAD-Daten gewonnen werden kann, verglichen werden. Hierzu identifiziert die Bildauswerteeinrichtung in dem Kamerabild die einzelnen Bauteile, beispielsweise anhand des vorgenannten Bar- oder OR-codes, und die Anschlussstellen, an denen das identifizierte Bauteil angeschlossen wurde. Weichen die identifizierten Anschlusspunkte oder Befestigungsmittel von dem Soll-Zustand gemäß Zusammenbau-Zeichnung, wie er aus dem CAD-System oder auch durch ein vorausgehendes Teach-In-Verfahren gewonnen werden kann, ab, kann eine Fehlermeldung ausgegeben und auf dem am Display angezeigten Kamerabild die entsprechende Fehlerstelle markiert werden.

Neben der kompletten Reparatur können von der Überwachungseinrichtung auch Teilschritte des Reparaturprozesses überwacht werden.

Alternativ oder zusätzlich kann die Überwachungseinrichtung überwachen, ob bei einem Wartungs- oder Reparaturschritt das jeweils richtige Werkzeug verwendet wird, beispielsweise der richtige Schraubenschlüssen zum Anziehen von Schrauben. Alternativ oder zusätzlich kann überwacht werden, ob eine passende Schraube und/oder ein Lager mit dem richtigen Querschnitt verbaut wird.

Alternativ oder zusätzlich kann die Überwachungseinrichtung auch Fehlbestückungen überwachen und erkennen. Wird beispielsweise ein Bauteil nicht an seinem gemäß Zeichnung vorgegebenen Platz gefunden bzw. identifiziert, kann eine Fehlermeldung angezeigt werden, beispielsweise durch Abbildung eines Fehlersymbols an der fehlbestückten Position im Kamerabild.

In Weiterbildung der Erfindung kann mittels des genannten Augmented Reality-Systems auch die Wartung bzw. Reparatur dokumentiert werden, beispielsweise bei sicherheitskritischen Bauteilen, um später einen entsprechenden Reparatur- bzw. Wartungsnachweis führen zu können.

Alternativ oder zusätzlich können in Weiterbildung der Erfindung auch Hilfen für den Werker bei Bedarf angezeigt werden, beispielsweise auf dem genannten Display. Derartige Hilfen können beispielsweise Texte umfassen, die eingeblendet werden, oder Videos sein, die auf dem Display abgespielt werden können.

Vorteilhafterweise kann die Augmented Reality-Einrichtung und/oder deren Kamera oder eine Kamera auch dazu genutzt werden, ein zu reparierendes und/oder zu ersetzendes Bauteil während des Reparatur- bzw. Wartungsprozesses zu identifizieren und/oder eine Fehlersuche und/oder eine Wartungs- bzw. Reparaturanleitung unterstützt durch einen über die Datenversorgungsstation und/oder die Maschinenstation kommunikativ angeschlossenen Experten zu begleiten bzw. durchzuführen. Beispielsweise kann durch das Augmented Reality-Modul ein defektes Bauteil identifiziert werden, indem ein - nicht zwangsweise vor Ort befindlicher - Servicetechniker das übertragene Ist-Bild der Einbauumgebung auf einem Bildschirm mitverfolgt, über das Augmented Reality-System Reparaturanweisungen und/oder Wartungsschritte vorgibt, die dann der Werker vor Ort ausführt, und anhand des übertragenen Kamerabilds ein zu ersetzendes bzw. zu reparierendes Bauteil identifiziert.

Vorteilhafterweise können die beschriebene Augmented Reality-Einrichtung und die 3D-Druckereinrichtung auch im Zusammenspiel miteinander besondere Vorteile erzielen. Insbesondere kann in der genannten Weise über das Augmented Reality-Modul ein defektes Bauteil identifiziert werden, welches dann über eine entsprechende Datenabfrage über die Datenversorgungsstation und Einspielen der 3D-Druckdaten nachgedruckt wird, oder ggf. auch über einen lokal vorhandenen 3D-Scanner erfasst und dann anhand der vom 3D-Scanner bereitgestellten 3D-Scandaten am 3D-Drucker nachgedruckt werden kann. Dies erlaubt eine kosten- und zeitoptimierte Reparatur, wobei es hier auch vorgesehen sein kann, dass ein Experte des jeweiligen Herstellers online hinzugezogen werden kann und bei der Fehlersuche und/oder bei der Reparatur und/oder bei der 3D-Erfassung und/oder bei dem 3D-Druck unterstützend tätig sein kann.

Wird in der genannten Weise von einer Wartungsstation, insbesondere einem sogenannten Predictive-Maintenance-System ein Austauschreife-Signal generiert, kann in Abhängigkeit dieses Ablegereife-Signals sowohl die Übermittlung der 3D-Druckdaten als auch die Übermittlung der Augmented-Reality-Daten an die Augmented-Reality-Einrichtung veranlasst und/oder angefordert werden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Gesamtübersicht über eine Vorrichtung zum Warten und/oder Reparieren einer Baumaschine nach einer vorteilhaften Ausführung der Erfindung, die die Daten- und Kommunikationsstruktur der Datenversorgungssta-tion und der Maschinendatenstationen miteinander und die Anbindung der lokalen Baustelle bzw. Wartungsstation zeigt,
- Fig. 2:: eine schematische Darstellung der lokalen Wartungsstation umfassend eine Augmented Reality-Einrichtung und deren Anbindung an die Datenversorgungsstation,
- Fig. 3:: eine schematische Darstellung der Wartungsstation umfassend eine 3D-Druckeinrichtung und einen 3D-Scanner sowie die Anbindung der Wartungsstation an die Datenversorgungsstation, und
- Fig. 4:: eine schematische Darstellung der Wartungsstation umfassend sowohl eine Augmented Reality-Einrichtung als auch eine 3D-Druckeinrichtung und deren Anbindung an die Datenversorgungseinrichtung, wobei die Wartungsstation online über einen Wartungs- und Reparaturexperten unterstützt wird, der über die Datenversorgungsstation an die Augmented Reality-Einrichtung angebunden ist.

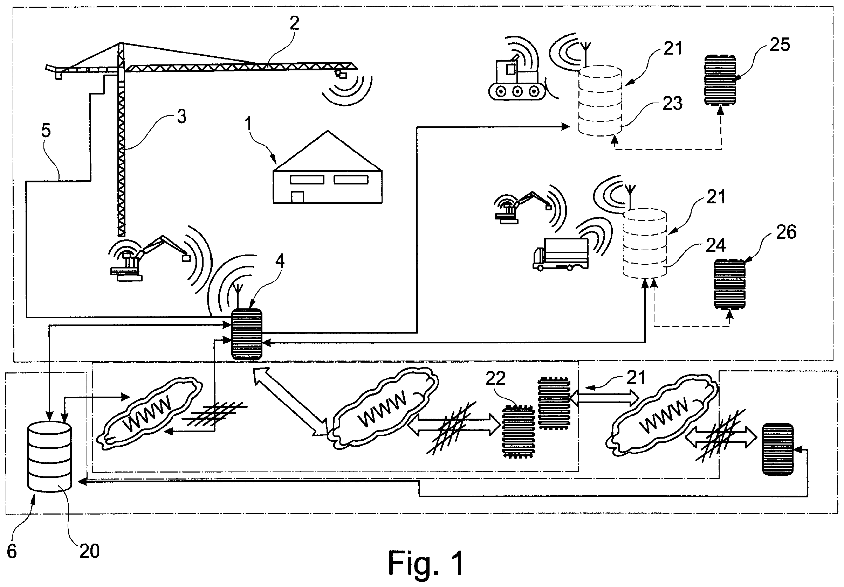

Wie die Figuren zeigen, insbesondere Fig. 1, kann die Vorrichtung zum Warten und/oder Reparieren einer Baumaschine eine auf verschiedenen Ebenen ineinandergreifende Daten- und Kommunikationsstruktur aufweisen, die es einerseits ermöglicht, lokal an einer Baustelle bzw. einem Einsatzort einer Baumaschine sensible Baumaschinendaten wie beispielsweise Konstruktionsdaten von Bauteilen bzw. Ersatzteilen, 3D-Druckdaten zu einem Ersatzteil, Service-, Wartungs- und Reparaturanweisungen, Betriebsanleitungen, Zertifizierungs- oder Verifizierungsdaten, Änderungsinformationen der Hersteller und/oder Projektdaten beispielsweise in Form von BIM-Daten bereitzustellen, andererseits aber Datenmissbrauch zu vermeiden. Beispielsweise kann auf einer Baustelle 1 - oder generell einem Einsatzort - eine erste Baumaschine 2 beispielsweise in Form eines Krans und eine zweite Baumaschine 3 beispielsweise in Form eines Baggers betrieben werden, die vom selben Hersteller oder von verschiedenen Herstellern stammen können.

Mit den Baumaschinen 2, 3 der Baustelle 1 kann eine lokale Zentralsteuereinheit 4 kommunizieren, wobei einerseits Betriebsdaten wie beispielsweise Betriebszeiten, Messdaten oder allgemein Rückmeldungen von den Baumaschinen 2, 3 auf die Zentralsteuereinheit 4 übertragen werden können. Alternativ oder zusätzlich kann umgekehrt die Zentralsteuereinheit 4 Daten und/oder Signale auf die Baumaschinen 2, 3 übertragen, beispielsweise in Form von Steuerbefehlen, die die jeweilige Baumaschine 2, 3 automatisch ausführen oder unter Kontrolle eines Maschinenführers ausführen kann, und/oder Anzeigedaten oder Ähnliches auf die jeweilige Baumaschine 2, 3 übertragen kann.

Die Zentralsteuereinheit 4 kann hierbei mit den Baumaschinen 2, 3 drahtlos kommunizieren, beispielsweise über Funk oder im Nahbereich auch über Bluetooth oder ähnlichen Kommunikationsstandards. Alternativ oder zusätzlich kann auch eine Datenübertragung über eine Datenleitung 5 erfolgen, vgl. Fig. 1.

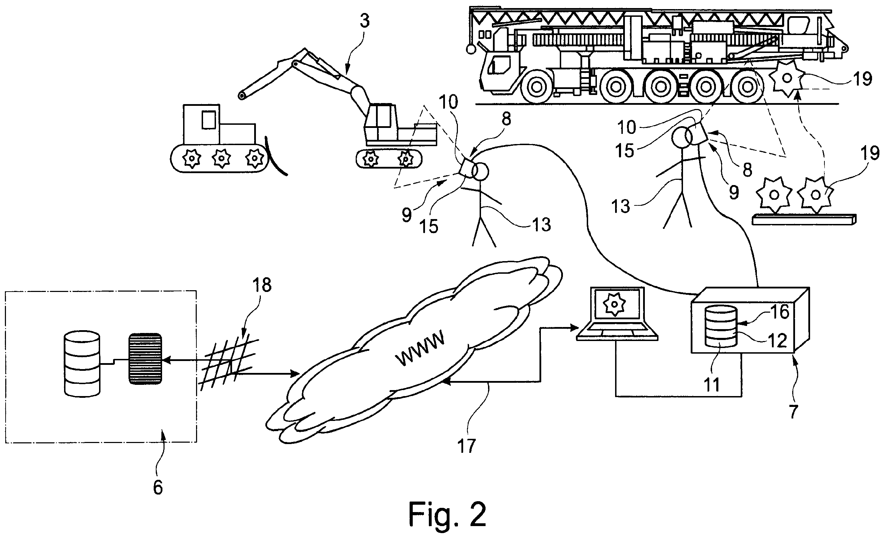

Die lokale Zentralsteuereinheit 4 bildet dabei zumindest einen Teil einer Datenverarbeitungsstation 6, über die eine auf der Baustelle 1 bereitgehaltene Wartungsstation 7 mit Bauteildaten versorgt werden kann, die zur Wartung und/oder Reparatur eines Bauteils einer der Baumaschinen 2, 3 benötigt werden oder zumindest hilfreich sind, wobei die genannte Wartungsstation 7 und deren möglichen Ausbildungen in den Figuren 2 bis 4 näher gezeigt sind.

Wie Fig. 2 zeigt, kann die Wartungsstation 7 eine Anzeigevorrichtung 8 zum Anzeigen von Reparaturinformationen an der jeweiligen Baumaschine umfassen, wobei die genannte Anzeigevorrichtung 8 mobil ausgebildet ist und von einem jeweiligen Werker am Körper getragen werden kann. Insbesondere kann die genannte Anzeigevorrichtung 8 eine Augmented Reality-Einrichtung 9 umfassen. Mittels eines solchen Augmented Reality-Systems 9 können dem Werker insbesondere ein Bild der jeweiligen Baumaschine und/oder ausschnittsweise ein Bild der Einbauumgebung eines bestimmten Bauteils der Baumaschine angezeigt und darin computergestützt Informationen in Form von Symbolen, Markierungen, Schriftzeichen, Videos und dergleichen eingeblendet werden, welche beispielsweise Wartungs- und/oder Montageanweisungen enthalten können, Anschlusspunkte identifzieren können, SollPositionen und Soll-Ausrichtungen eines zu ersetzendes Bauteils anzeigen können oder andere für die Reparatur bzw. Wartung hilfreiche Informationen umfassen können.

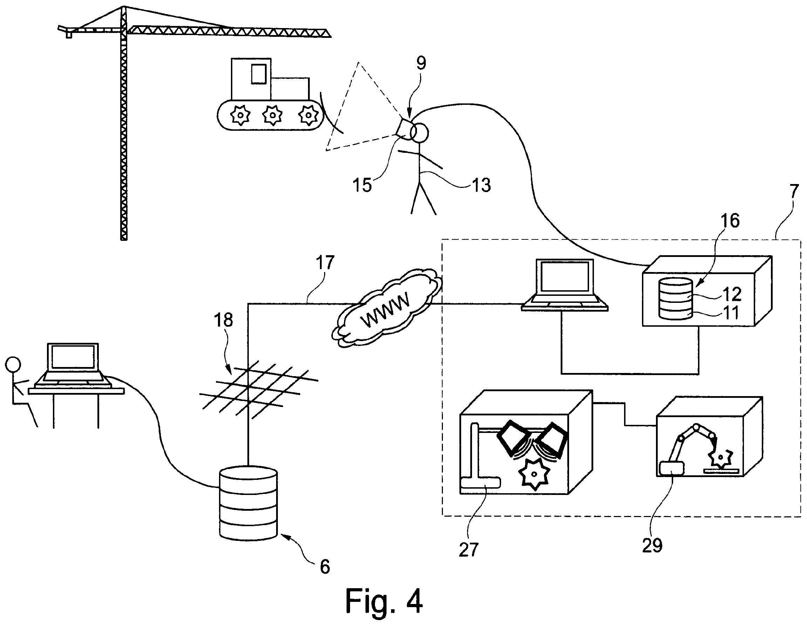

Wie Fig. 2 oder Fig. 4 zeigt, kann das Augmented Reality-System 9 zumindest eine Kamera 10 umfassen, die eine jeweilige Baumaschine 2, 3 beobachtet und ein Ist-Bild der Einbauumgebung eines Bauteils bzw. der gesamten Baumaschine bereitstellt.

Von einem Server oder einem Rechner 16 des Augmented Reality-Systems ARS wird das Kamerabild auf zumindest einem Display der Anzeigevorrichtung 8 angezeigt. Dieses Display kann einen neben der Baumaschine installierten Bildschirm umfassen.

Alternativ oder zusätzlich kann das Display auch ein in eine Datenbrille 15 integriertes Brillendisplay aufweisen, vgl. Fig. 2, das beispielsweise nach Art eines Projektors bzw. eines Head-up-Displays die darzustellenden Bilder und Informationen auf einem Brillenglas bzw. einer brillenglasähnlichen Bildschirmfläche anzeigen kann, die vor ein Auge des Werkers 13 positionierbar ist, beispielsweise auch wegklappbar sein kann, um auch einen freien Blick auf die vorzunehmende Arbeit zu gestatten.

Wie Fig. 2 zeigt, kann in die genannte Datenbrille 15 auch die genannte oder eine weitere Kamera 10 integriert sein, die ebenfalls Teil des Augmented Reality-Systems ARS sein kann bzw. an den genannten Rechner 16 angebunden werden kann, um mit einzublendenden Zusatzinformationen überlagert zu werden, die dann wiederum auf einem der Displays dargestellt werden.

Wie Fig. 2 zeigt, kann der Rechner 16 des Augmented Reality-Systems 9 an die Datenverarbeitungsstation 6 angebunden werden, aus dem Informationen über die zu wartenden Bauteile, deren Anschlusspunkte, deren Soll-Position und deren Soll-Ausrichtung in der Baumaschine 2 und/oder insbesondere auch deren Schaltplan bzw. Verdrahtungsplan gewonnen werden können.

Hierzu kann das Augmented Reality-System 9 zunächst ein zu verbauendes Bauteil 2 mittels einer Identifiziereinrichtung 11 identifizieren. Dabei kann eine Bildauswerteeinrichtung 12 und/oder eine Scaneinrichtung bzw. eine andere Leseeinrichtung vorgesehen sein, die eine Markierung an dem Bauteil 2, beispielsweise in Form eines Bar- oder QR-codes, auswerten kann. Wird in den von der Kamera 10 bereitgestellten Bilddaten ein solcher Bar- oder QR-code bzw. eine solche Markierung erkannt, kann das Bauteil identifiziert werden, beispielsweise durch Rückgriff auf Daten aus der Datenverarbeitungsstation 6, in dem zu dem erkannten Barcode entsprechende Informationen zugeordnet abgelegt sein können. Alternativ oder zusätzlich zu einer solchen Erkennung anhand eines Bar- oder QR-codes oder einer Markierung, identifiziert die Identifiziereinrichtung 11 ein Bauteil erfindungsgemäß anhand dessen Form und/oder Konturierung und/oder Farbe, und ggf. zusätzlich anderen Charakteristika.

Eine solche Identifizierung des Bauteils anhand der Form und/oder Konturierung und/oder Farbe oder anderen Charakteristika kann ebenfalls unter Zuhilfenahme von Daten erfolgen, die von der Datenverarbeitungsstation 6 bereitgestellt werden.

Gegebenenfalls zusätzlich kann ein zu reparierendes bzw. zu ersetzendes Bauteil auch automatisch durch ein Preview-Maintenance-System bzw. eine/die Wartungsstation identifiziert werden, und zwar in Abhängigkeit erfasster Betriebsdaten der Baumaschine und/oder des Bauteils und/oder anhand erfasster Charakteristika des Bauteils und/oder der Baumaschine. Solche die Lebensdauer bzw. Austauschreife vorhersagende Wartungssysteme können beispielsweise Betriebsdaten wie Betriebsstunden, Lastspiele, Lastamplituden, klimatische Einsatzbedingungen wie Salzgehalt der Luft oder Temperaturen oder Rußpartikelgehalt erfassen und/oder Bauteilcharakteristika wie beispielsweise metallischen Abriebpartikelgehalt im Ölspeicher, Einlaufriefen oder Risse an hoch beanspruchten Bauteilen wie Zahnrädern oder Seiltrommeln sensorisch erfassen und auswerten, um die noch verbleibende Lebensdauer abzuschätzen. Ein Analysebaustein, der zum Auswerten der erfassten Betriebsdaten und/oder der bestimmten Bauteilcharakteristika konfiguriert ist, kann in Abhängigkeit der genannten Daten und Charakteristika ein Austauschreife-Signal generieren, bei dessen Vorliegen ein damit verknüpftes Bauteil als auszutauschen identifiziert wird.

Wie Fig. 2 zeigt, ist der Rechner 16 der Augmented Reality-Einrichtung 9, der Teil der Wartungsstation 7 sein kann, über eine Ferndatenverbindung, beispielsweise das Internet, an die Datenversorgungsstation 6 angebunden sein, wobei eine solche Kommunikationsverbindung 17 durch eine Firewall 18 oder eine ähnliche Datensicherheitseinrichtung gesichert sein kann, vgl. Fig. 1.

Wird in der genannten Weise ein zu wartendes bzw. zu ersetzendes Bauteil 19 - gemäß Fig. 2 beispielsweise ein Zahnrad - identifiziert, kann die Datenversorgungsstation 6 Bauteildaten an die Wartungsstation 7 senden, welche dann als Reparaturinformationen an der Datenbrille 15 eingeblendet werden können. Dies können in der vorgenannten Weise Darstellungen und/oder Informationen zur Einbauumgebung, zur Ausrichtung des einzubauenden Bauteils und weitere, ergänzende Informationen beispielsweise in Form von Textinformationen sein, die dem Werker 13 verdeutlichen, mit welchen Schritten und wo genau das Bauteil zu verbauen ist.

Die entsprechende Datenanfrage von der Wartungsstation 7 an die Datenversorgungsstation 6 bzw. die Kommunikation zwischen diesen beiden Stationen kann vorteilhafterweise einer Überprüfung der Berechtigung der Wartungsstation 7 bezüglich des angefragten Bauteils unterzogen werden. Hierzu können Codes und/oder Schlüssel und/oder ähnliche Sicherheitsabfragen zwischen der Wartungsstation 7 und der Datenversorgungsstation 6 ausgetauscht und von letzterer überprüft werden, sodass dann die Datenversorgungsstation 6 die jeweiligen Bauteildaten nur dann an die Wartungsstation 7 bereitstellt, wenn die Wartungsstation 7 dazu auch berechtigt ist.

Die genannte Datenversorgungsstation 6, die einem Systemdienstleister gehören kann, kann die benötigten Bauteildaten in verschiedener Weise beschaffen. Wie Fig. 1 verdeutlicht, kann die Datenversorgungsstation 6 des Systemdienstleisters mit der genannten lokalen Steuereinheit 4 an einen zentralen Rechner oder Server 20 des Systemdienstleisters angebunden sein, was wahlweise über eine fest installierte Datenleitung oder auch über das Internet, ggf. unter Zwischenschaltung einer weiteren Firewall, erfolgen kann. Der Rechner bzw. Server 20 des Systemdienstleister kann die Daten dann von einem oder mehreren Maschinendatenstationen 21 beschaffen, wobei diese Maschinendatenstationen 21 eine Vielzahl von Bauteildaten zu einer Vielzahl von Bauteilen einer oder mehrerer Baumaschinen speichern können, das heißt das Datenangebot in der Maschinendatenstation 21 ist weit größer als die tatsächlich benötigten Bauteildaten.

Wie Fig. 1 verdeutlicht, kann eine solche Maschinendatenstation 21 beispielsweise eine Datencloud 22 umfassen, auf die die Datenversorgungsstation 6 Zugriff hat, was beispielsweise über das Internet, ggf. unter Zwischenschaltung einer Firewall 18 erfolgen kann. Dieser Zugriff der Datenversorgungsstation 6 auf die Datencloud 22 erfolgt dabei vorteilhafterweise ebenfalls unter Überprüfung der Zugriffsberechtigung bzw. Autorisierung der Datenversorgungsstation 6. Hierzu können in der schon genannten Weise beispielsweise Codes oder Schlüssel oder andere Sicherheitsalgorithmen ausgetauscht und von einem Cloud-Rechner überprüft werden, sodass die Datenversorgungsstation 6 nur Zugriff auf solche Daten hat, zu denen die Datenversorgungsstation 6 berechtigt ist.

Wie Fig. 1 andeutet, kann ggf. auch die lokale Steuereinheit 4 der Datenversorgungsstation 6 ohne den Umweg über den Rechner 20 direkt auf die genannte Datencloud 22 zugreifen, wobei hier wiederum die entsprechende Authentifizierungsüberprüfung stattfinden kann.

Alternativ oder zusätzlich zu einer solchen Datencloud 22 kann die Datenversorgungsstation 6 die benötigten Daten auch von Maschinendatenstationen 21 der jeweiligen Maschinenhersteller abfragen, wobei solche weiteren Maschinendatenstationen 21, vgl. Fig. 1, jeweils Herstellerrechner 23 bzw. 24 aufweisen können, in denen die zuvor genannte Vielzahl von Bauteildaten abgespeichert sein kann. Auch auf diesem Wege wird vorteilhafterweise eine Überprüfung der Authentifizierung in der genannten Weise vorgenommen. Gegebenenfalls können auch alternative lokale Steuereinheiten 25, 26 mit den Herstellerrechnern 23, 24 kommunizieren.

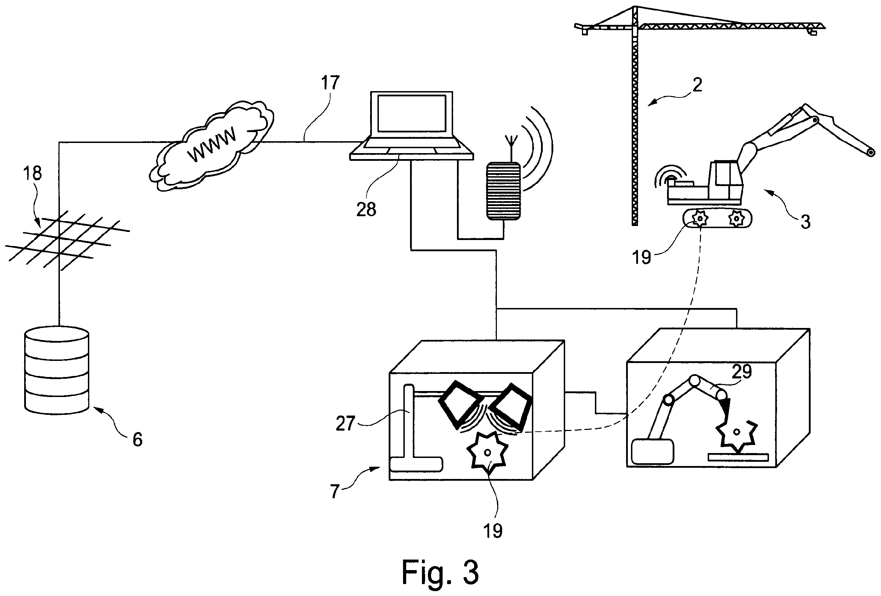

Wie Fig. 3 verdeutlicht, kann die Wartungsstation 7 auch einen 3D-Drucker 29 umfassen, mit Hilfe dessen anhand von 3D-Druckdaten Bauteile einer jeweilgen Baumaschine 2 nachgedruckt werden können. Ein solcher 3D-Drucker 29 kann über einen Drucksteuerrechner 28 der Wartungsstation 7 gesteuert werden, wobei der genannte Drucksteuerrechner 28 der Wartungsstation 7, der Teil der zuvor genannten Baustellenleitrechnereinrichtung sein kann, die benötigten Daten bei der Datenversorgungsstation 6 abfragen und beschaffen kann. Hierzu kann der Drucksteuerrechner 28 beispielsweise über eine feste Datenleitung oder auch über das Internet an die Datenversorgungsstation 6 angebunden sein, vorteilhafterweise wiederum unter Zwischenschaltung einer Firewall 18 oder einer ähnlichen Sicherheitseinrichtung. Auch der Drucksteuerrechner 28 wird dabei in der schon beschriebenen Weise hinsichtlich seiner Berechtigung überprüft, jeweilige Bauteildaten abzufragen.

Ist die Wartungsstation 7 berechtigt, ein bestimmtes Bauteil nachzudrucken, übersendet die Datenversorgungsstation 6 die entsprechenden 3D-Druckdaten an die Wartungsstation 7, deren Drucksteuerrechner 28 dann den 3D-Drucker 29 entsprechend ansteuert, um das benötigte Bauteil schichtweise aufzubauen.

Die genannten 3D-Druckdaten können von der Datenversorgungsstation 6 analog zu den Bauteildaten, die für die Augmented Reality-Einrichtung 9 benötigt werden, in der zuvor schon beschriebenen Weise von einer oder mehreren Maschinendatenstationen 21 beschafft werden, beispielsweise aus der Datencloud 22 oder einem der individuellen Herstellerrechner 23 oder 24.

Wie Fig. 3 weiterhin verdeutlicht, kann die Wartungsstation 7 weiterhin auch über einen 3D-Scanner 27 verfügen, mit Hilfe dessen ein zu reparierendes Bauteil eingescannt und dessen Geometrie- und/oder Konstruktionsdaten eines zu reparierenden Bauteiles durch Abtasten generiert werden können. Soll beispielsweise, wie Fig. 3 zeigt, ein Bauteil 2 in Form eines Zahnrades reproduziert werden, scannt der 3D-Scanner 27 das verschlissene Zahnrad ein und generiert hierbei einen 3D-Bauteildatensatz, der dann dem 3D-Drucker 29 - bzw. dessen Drucksteuerrechner 28 - zugeführt wird, um das Bauteil anhand der abgescannten 3D-Daten nachzudrucken.

Wie Fig. 4 verdeutlicht, ergeben sich besondere Vorteile der Wartungsstation 7, wenn diese sowohl über die zuvor beschriebene Augmented Reality-Einrichtung 9 als auch die beschriebene 3D-Druckeinrichtung 29 und ggf. auch den zugehörigen 3D-Scanner 27 verfügt.

In der schon erläuterten Weise kann dabei auch ein zusätzlicher Experte 30 über die durch das Augmented Reality-System 9 generierten Bilddaten mit eingebunden werden, vorteilhafterweise über die Datenversorgungsstation 6, an die der Werker 13 angebunden sein kann, um auf einem Bildschirm die an der Baumaschine generierten Bilder mitzuverfolgen und umgekehrt Reparaturanweisungen und/oder Steuerbefehle für den 3D-Drucker an die Baustelle zu übersenden.

Um die Datensicherheit zu erhöhen, kann vorgesehen sein, dass die Datenversorgungsstation 6 und/oder die Maschinendatenstation 21 eine Zeitsperreinrichtung umfasst, die dazu konfiguriert ist, die Bereitstellung der Daten durch die Datenversorgungsstation 6 und/oder durch die Maschinendatenstation 21 auf einen vorbestimmten Zeitraum zu begrenzen.

Vorteilhafterweise kann weiterhin vorgesehen sein, dass der Authentifizierungsbaustein der Datenversorgungsstation 6 und der Authentifizierungsbaustein der Maschinendatenstation 21 unterschiedlich ausgebildet sind und/oder dazu konfiguriert sind, unterschiedliche Authentifizierungskriterien, insbesondere Codierungen und/oder Schlüssel, zu überprüfen.

Mit dem beschriebenen System kann also eine Wartung und Reparatur einer auf einer Baustelle befindlichen Baumaschine einfach und doch sicher erledigt werden. Insbesondere kann zum Warten und/oder Reparieren einer Baumaschine 2, 3 am Einsatzort der Baumaschine mittels einer mobilen, am Einsatzort der Baumaschine platzierten Wartungsstation 7 umfassend einen 3D-Drucker 29 zum Drucken von Ersatzteilen 19 für die Baumaschine (2, 3) anhand von Bauteildaten vorgesehen werden, dass der Wartungsstation 7 von einer örtlich getrennten Datenversorgungsstation 6 über eine Kommunikationsverbindung auf eine Abfrage von der Wartungsstation 7 hin 3D-Druckdaten zum Drucken des Ersatzteils bereitgestellt werden, und von der Wartungsstation 7 anhand der von der Datenversorgungsstation 6 empfangenen 3D-Druckdaten das Ersatzteil 19 mittels des 3D-Druckers 29 am Einsatzort der Baumaschine 2, 3 schichtweise gedruckt wird.

Dabei kann vorgesehen werden, dass der Datenversorgungsstation 6 über eine Kommunikationsverbindung von einer von den Wartungs- und Datenversorgungsstationen örtlich getrennten Maschinendatenstation 21 die genannten 3D-Druckdaten bereitgestellt werden, wobei an der genannten Maschinendatenstation 21 in einer Speichereinrichtung über die genannten 3D-Druckdaten hinaus eine Vielzahl von Bauteildaten zu weiteren Bauteilen der Baumaschine 2, 3 oder einer anderen Baumaschine bereitgehalten werden, wobei durch die Datenversorgungsstation 7 und/oder die Maschinendatenstation 21 ein bestimmter Bauteildatensatz für das zu reparierende Bauteil 19 aus der Vielzahl gespeicherter Bauteildaten anhand einer von der Wartungsstation übersandten Datensatzanforderung ausgewählt und der Wartungsstation bereitgestellt wird.

Weiterhin kann zum Warten und/oder Reparieren einer Baumaschine 2, 3 am Einsatzort der Baumaschine mittels einer mobilen, am Einsatzort der Baumaschine platzierten Wartungsstation 7 umfassend einen 3D-Drucker 29 zum Drucken von Ersatzteilen 19 für die Baumaschine 2, 3 anhand von Bauteildaten und/oder eine mobile Anzeigevorrichtung 8 zum Anzeigen von Reparaturinformation an der Baumaschine 2, 3 anhand von Bauteildaten, vorgesehen werden, dass mittels einer Augmented Reality-Einrichtung 9 auf einem Display ein Bild des zu reparierenden Bauteils 19 und der Einbauumgebung des zu reparierenden Bauteils angezeigt und eine Einbauposition des zu reparierenden Bauteils 19 in der Einbauumgebung in das angezeigte Bild auf dem Display eingeblendet wird, wobei der Wartungsstation 7 über eine Kommunikationsverbindung von einer Datenversorgungsstation 6 her auf eine Anforderung der Wartungsstation hin Augmented Reality-Daten zum Einblenden der Bauteilinformation und/oder-position in der Einbauumgebung übermittelt werden, wobei die Einbauposition des zu reparierenden Bauteils 19 in der Einbauumgebung in das angezeigte Bild auf dem Display in Abhängigkeit der von der Datenversorgungsstation 6 an die Wartungsstation 7 übermittelten Augmented-Reality- und/oder Bauteildaten eingeblendet wird.

Dabei kann vorgesehen werden, dass der Datenversorgungsstation 6 über eine Kommunikationsverbindung von einer von den Wartungs- und Datenversorgungsstationen 6, 7 örtlich getrennten Maschinendatenstation 21 die genannten Augmented-Reality-Daten bereitgestellt werden, wobei an der genannten Maschinendatenstation 21 in einer Speichereinrichtung über die genannten Augmented-Reality-Daten hinaus eine Vielzahl von Augmented-Reality- und Bauteildaten zu weiteren Bauteilen der Baumaschine 2, 3 oder einer anderen Baumaschine bereitgehalten werden, wobei durch die Datenversorgungsstation 7 und/oder die Maschinendatenstation 21 ein bestimmter Augmented-Reality-Datensatz für das zu reparierende Bauteil 19 aus der Vielzahl gespeicherter Augmented-Reality- und Bauteildaten anhand einer von der Wartungsstation übersandten Datensatzanforderung ausgewählt und der Wartungsstation bereitgestellt wird.

## Patentansprüche

1. Vorrichtung zum Warten und/oder Reparieren einer Baumaschine (2, 3) mit einer mobilen, am Einsatzort der Baumaschine platzierbaren Wartungsstation (7) umfassend einen 3D-Drucker (29) zum Drucken von Ersatzteilen (19) für die Baumaschine (2, 3) anhand von Bauteildaten und/oder eine mobile Anzeigevorrichtung (8) zum Anzeigen von Reparaturinformation an der Baumaschine (2, 3) anhand von Bauteildaten, die eine Augmented Reality-Einrichtung (9) umfasst, die auf einem Display ein Bild des zu reparierenden Bauteils (19) und der Einbauumgebung des zu reparierenden Bauteils anzeigt und eine Einbauposition des zu reparierenden Bauteils (19) in der Einbauumgebung in das angezeigte Bild auf dem Display einblendet, wobei eine Datenversorgungsstation (6) über eine Kommunikationsverbindung mit der Wartungsstation (7) verbindbar und dazu konfiguriert ist, der Wartungsstation (7) Augmented Reality-Daten zum Einblenden der Bauteilinformation und/oder -position in der Einbauumgebung bereitzustellen, und die Wartungsstation (7) dazu konfiguriert ist, die Einbauposition des zu reparierenden Bauteils (19) in der Einbauumgebung in das angezeigte Bild auf dem Display in Abhängigkeit der von der Datenversorgungsstation (6) erhaltenen Augmented-Reality- und/oder Bauteildaten einzublenden, **dadurch gekennzeichnet, dass** die Wartungsstation (7) und/oder die Datenversorgungsstation (6) eine Identifiziereinrichtung (11) zum Identifizieren eines reparatur- und/oder wartungsbedürftigen Bauteils (19) an der Baumaschine (2) mit einer Bildauswerteeinrichtung zum Auswerten von durch einer Kamera (10) aufgenommenen Bildern des zu reparierenden Bauteils und Identifizieren des Bauteils (19) aus diesen Bilddaten aufweist, wobei die Bildauswerteeinrichtung Farbauswertemittel zum Identifizieren des Bauteils anhand einer Farbe des Bauteils und/oder Geometrieauswertemittel zum Identifizieren des Bauteils anhand eines Durchmesser des Bauteiles und/oder einer Abmessung zumindest einer Haupterstreckungsachse und/oder eines Geometriemaßes des Bauteils aufweist.

2. Vorrichtung nach dem vorhergehenden Anspruch, wobei eine von der Wartungsstation örtlich getrennte Datenversorgungsstation (6) vorgesehen ist, die über eine Kommunikationsverbindung mit der Wartungsstation (7) verbindbar und dazu konfiguriert ist, der Wartungsstation (7) 3D-Druckdaten zum Drucken des Ersatzteils bereitzustellen, und die Wartungsstation (7) dazu konfiguriert ist, anhand der von der Datenversorgungsstation (6) empfangenen 3D-Druckdaten das Ersatzteil (19) schichtweise zu drucken, wobei die Datenversorgungsstation (6) über eine Kommunikationsverbindung mit einer von den Wartungs- und Datenversorgungsstationen örtlich getrennten Maschinendatenstation (21) verbindbar ist, die dazu konfiguriert ist, der Datenversorgungsstation (6) die genannten 3D-Druckdaten bereitzustellen, wobei die genannte Maschinendatenstation (21) eine Speichereinrichtung umfasst, in der über die genannten 3D-Druckdaten hinaus eine Vielzahl von Bauteildaten zu weiteren Bauteilen der Baumaschine (2, 3) oder einer anderen Baumaschine gespeichert sind, wobei die Datenversorgungsstation (6) und/oder die Maschinendatenstation (21) Auswahlmittel zum Auswählen eines bestimmten Bauteildatensatzes aus der Vielzahl gespeicherter Bauteildaten anhand einer von der Wartungsstation übersandten Datensatzanforderung aufweist.

3. Vorrichtung nach einem der vorhergehenden Ansprüche, wobei der 3D-Drucker (29) einen verfahrbaren, insbesondere dreiachsig verfahrbaren, Auftragskopf zum schichtweisen Aufbringen von pulverförmigen und/oder pastösen und/oder flüssigen Werkstoffen und einen Bestrahlkopf zum Bestrahlen der aufgetragenen Werkstoffschichten mit einem Laserstrahl oder Elektronenstrahl oder Plasmastrahl zum schichtweise Aufschmelzen oder Verfestigen und/oder Aushärten und/oder zur chemischen Reaktion der Werkstoffschicht aufweist, um jeweils eine ausgehärtete Schicht zu bilden.

4. Vorrichtung nach einem der vorhergehenden Ansprüche, wobei die Wartungsstation (7) einen 3D-Scanner (27) zum Erfassen eines zu reparierenden Bauteils (19) und Bereitstellen von 3D-Abtastdaten, die das genannten Bauteil (19) kennzeichnen, aufweist, und der 3D-Drucker (29) dazu konfiguriert ist, anhand der vom 3D-Scanner (27) bereitgestellten 3D-Abtastdaten ein Ersatzteil (19) für das genannte Bauteil (19) zu drucken.

5. Vorrichtung nach einem der vorhergehenden Ansprüche, wobei die Datenversorgungsstation (6) über eine Kommunikationsverbindung mit einer/der von den Wartungs- und Datenversorgungsstationen örtlich getrennten Maschinendatenstation (21) verbindbar ist, die dazu konfiguriert ist, der Datenversorgungsstation (6) die genannten Augmented Reality-Daten bereitzustellen, wobei die genannte Maschinendatenstation (21) eine Speichereinrichtung zum Speichern einer Vielzahl von Augmented Reality- und/oder Bauteildaten einer Vielzahl weiterer Bauteile der Baumaschine (2, 3) oder einer weiteren Baumaschine gespeichert sind, wobei die Datenversorgungsstation (6) und/oder die Maschinendatenstation (21) Auswahlmittel zum Auswählen eines bestimmten Augmented-Reality- und/oder Bauteildatensatzes aus der Vielzahl gespeicherter Bauteildaten anhand einer von der Wartungsstation (7) übersandten Datensatzanforderung aufweist.

6. Vorrichtung nach einem der vorhergehenden Ansprüche, wobei die Identifiziereinrichtung (11) einen Codeleser zum Lesen einer am zu reparierenden Bauteil (19) angebrachten Markierung, insbesondere einen Barcodeleser aufweist.

7. Vorrichtung nach einem der vorhergehenden Ansprüche, wobei die Augmented Reality-Einrichtung (9) Steuermittel zum kontinuierlichen oder zyklischen Anpassen des auf dem Display angezeigten Bilds der Einbauumgebung des zu reparierenden und/oder zu wartenden Bauteils (19) an den Reparatur-Ist-Zustand der Baumaschine (2) aufweist, wobei die genannten Steuermittel dazu konfiguriert sind, mit fortschreitender Reparatur und/oder Wartung in dem Bild der Einbauumgebung nach und nach demontierte Bauteile nicht mehr anzuzeigen und/oder neu montierte Bauteile anzuzeigen.

8. Vorrichtung nach einem der vorhergehenden Ansprüche, wobei eine auf die zu reparierende Baumaschine (2, 3) gerichtete Kamera (10) zum Bereitstellen des auf dem Display der Augmented Reality-Einrichtung (9) anzuzeigenden Bilds als Livebild und/oder als aufgezeichnetes Bild vorgesehen ist.

9. Vorrichtung nach einem der vorhergehenden Ansprüche, wobei das Display der Augmented Reality-Einrichtung (9) und/oder die Kamera (10) in eine vom Werker (13) zu tragende Datenbrille (15) integriert sind.

10. Vorrichtung nach einem der vorhergehenden Ansprüche, wobei die Augmented Reality-Einrichtung (9) eine CAD-Datenschnittstelle aufweist und die Datenversorgungsstation (6) dazu konfiguriert ist, der Wartungsstation (7) CAD-Daten zu dem zu reparierenden Bauteil (19) und/oder zu der Einbauumgebung des Bauteils (19) bereitzustellen, anhand derer die Augmented Reality-Einrichtung (9) eine CAD-Darstellung des Bauteils (19) und/oder dessen Einbauumgebung anzeigt.

11. Vorrichtung nach einem der vorhergehenden Ansprüche, wobei die Datenversorgungsstation (6) und/oder die Maschinendatenstation (21) eine Zeitsperreinrichtung umfasst, die dazu konfiguriert ist, die Bereitstellung der Daten durch die Datenversorgungsstation (6) und/oder durch die Maschinendatenstation (21) auf einen vorbestimmten Zeitraum zu begrenzen.

12. Vorrichtung nach einem der vorhergehenden Ansprüche, wobei die Datenversorgungsstation (6) einen Authentifizierungsbaustein zum Überprüfen der Berechtigung der Wartungsstation (7), bestimmte Bauteildaten zu erhalten, und die Maschinendatenstation (21) einen Authentifizierungsbaustein zum Überprüfen der Berechtigung der Datenversorgungsstation (6) zum Erhalten vorbestimmter Bauteildaten aufweist, wobei der Authentifizierungsbaustein der Datenversorgungsstation (6) und der Authentifizierungsbaustein der Maschinendatenstation (21) unterschiedlich ausgebildet sind und/oder dazu konfiguriert sind, unterschiedliche Authentifizierungskriterien, insbesondere Codierungen und/oder Schlüssel, zu überprüfen.

13. Vorrichtung nach einem der vorhergehenden Ansprüche, wobei die Maschinendatenstation (21) eine Datencloud (22) umfasst, in der Bauteildaten einer Vielzahl von Bauteilen einer Vielzahl von Baumaschinen gespeichert sind.

14. Verfahren zum Warten und/oder Reparieren einer Baumaschine (2, 3) am Einsatzort der Baumaschine mittels einer mobilen, am Einsatzort der Baumaschine platzierten Wartungsstation (7) umfassend einen 3D-Drucker (29) zum Drucken von Ersatzteilen (19) für die Baumaschine (2, 3) anhand von Bauteildaten und/oder eine mobile Anzeigevorrichtung (8) zum Anzeigen von Reparaturinformation an der Baumaschine (2, 3) anhand von Bauteildaten, wobei mittels einer Augmented Reality-Einrichtung (9) auf einem Display ein Bild des zu reparierenden Bauteils (19) und der Einbauumgebung des zu reparierenden Bauteils angezeigt und eine Einbauposition des zu reparierenden Bauteils (19) in der Einbauumgebung in das angezeigte Bild auf dem Display eingeblendet wird, wobei der Wartungsstation (7) über eine Kommunikationsverbindung von einer Datenversorgungsstation (6) her auf eine Anforderung der Wartungsstation hin Augmented Reality-Daten zum Einblenden der Bauteilinformation und/oder -position in der Einbauumgebung übermittelt werden, wobei die Einbauposition des zu reparierenden Bauteils (19) in der Einbauumgebung in das angezeigte Bild auf dem Display in Abhängigkeit der von der Datenversorgungsstation (6) an die Wartungsstation (7) übermittelten Augmented-Reality- und/oder Bauteildaten eingeblendet wird, **dadurch gekennzeichnet, dass** mittels einer Identifiziereinrichtung (11) an der Wartungsstation (7) und/oder der Datenversorgungsstation (6) ein reparatur- und/oder wartungsbedürftiges Bauteil (19) an der Baumaschine (2) identifiziert wird, wobei mit einer Bildauswerteeinrichtung durch eine Kamera (10) aufgenommene Bilder des zu reparierenden Bauteils ausgewertet und das Bauteil (19) aus diesen Bilddaten identifiziert wird, wobei die Bildauswerteeinrichtung das Bauteil mittels Farbauswertemitteln anhand einer Farbe des Bauteils und/oder mittels Geometrieauswertemitteln anhand eines Durchmesser des Bauteiles und/oder einer Abmessung zumindest einer Haupterstreckungsachse und/oder eines Geometriemaßes des Bauteils identifiziert.

15. Verfahren nach dem vorhergehenden Anspruch, wobei der Datenversorgungsstation (6) über eine Kommunikationsverbindung von einer von den Wartungs- und Datenversorgungsstationen (6, 7) örtlich getrennten Maschinendatenstation (21) die genannten Augmented-Reality-Daten bereitgestellt werden, wobei an der genannten Maschinendatenstation (21) in einer Speichereinrichtung über die genannten Augmented-Reality-Daten hinaus eine Vielzahl von Augmented-Reality- und Bauteildaten zu weiteren Bauteilen der Baumaschine (2, 3) oder einer anderen Baumaschine bereitgehalten werden, wobei durch die Datenversorgungsstation (7) und/oder die Maschinendatenstation (21) ein bestimmter Augmented-Reality-Datensatz für das zu reparierende Bauteil (19) aus der Vielzahl gespeicherter Augmented-Reality- und Bauteildaten anhand einer von der Wartungsstation übersandten Datensatzanforderung ausgewählt und der Wartungsstation bereitgestellt wird, wobei die Bereitstellung der Augmented-Reality-Daten an die Augmented-Reality-Einrichtung (8) automatisch in Abhängigkeit eines Austauschreif-Signals veranlasst wird, welches Austauschreife-Signal von einer Restlebensdauer-Vorhersage-Einrichtung in Abhängigkeit sensorisch erfasster Betriebsdaten und/oder erfasster Bauteilcharakteristika bestimmt wird.

## Claims

1. Device for maintaining and/or repairing a construction machine (2, 3), with a mobile maintenance station (7) that can be placed at the jobsite of the construction machine, comprising a 3D printer (29) for printing replacement parts (19) for the construction machine (2, 3) on the basis of component data and/or a mobile display device (8) for displaying repair information on the construction machine (2, 3) on the basis of component data, that comprises an augmented reality device (9) that displays on a display an image of the component (19) to be repaired and the mounting environment of the component to be repaired, and overlays a mounting position of the component (19) to be repaired in the mounting environment onto the displayed image on the display, wherein a data supply station (6) can be connected to the maintenance station (7) by way of a communication link and is configured for providing the maintenance station (7) with augmented reality data for overlaying the component information and/or position in the mounting environment, and the maintenance station (7) is configured for overlaying the mounting position of the component (19) to be repaired in the mounting environment onto the displayed image on the display, depending on the augmented reality and/or component data obtained from the data supply station (6), **characterized in that** the maintenance station (7) and/or the data supply station (6) comprises an identification device (11) for identifying a component (19) on the construction machine (2) that requires to be repaired and/or maintained with an image evaluation device for evaluating images of the component to be repaired taken by a camera (10) and identifying the component (19) from these image data, wherein the image evaluation device comprises color evaluation means for identifying the component on the basis of a color of the component and/or geometry evaluation means for identifying the component on the basis of a diameter of the component and/or a dimension of at least one main axis of extension and/or a geometry dimension of the component.

2. Device according to the foregoing claim, wherein a data supply station (6) that is at a separate location from the maintenance station is provided, can be connected to the maintenance station (7) by way of a communication link and is configured for providing the maintenance station (7) with 3D printing data for printing the replacement part, and the maintenance station (7) is configured for printing the replacement part (19) layer by layer on the basis of the 3D printing data received from the data supply station (6), wherein the data supply station (6) can be connected to a machine data station (21) that is at a separate location from the maintenance and data supply stations by a communication link and that is configured for providing the said 3D printing data to the data supply station (6), wherein the said machine data station (21) comprises a storage device, in which, in addition to the said 3D printing data, a plurality of component data relating to further components of the construction machine (2, 3) or another construction machine are stored, the data supply station (6) and/or the machine data station (21) having selection means for selecting given component data set from the plurality of stored component data on the basis of a data set request sent by the maintenance station.

3. Device according to any one of the foregoing claims, wherein the 3D printer (29) has a movable, in particular triaxially movable, application head for the layer by layer applying of pulverulent and/or paste-like and/or liquid materials and an irradiation head for irradiating the applied material layers with a laser beam or electron beam or plasma beam for melting or solidifying and/or curing and/or for chemical reaction of the material layer in layers in order to form a cured layer respectively.

4. Device according to any one of the foregoing claims, wherein the maintenance station (7) comprises a 3D scanner (27) for detecting a component (19) to be repaired and providing 3D scan data characterizing said component (19), and the 3D printer (29) is configured to print a replacement part (19) for said component (19) based on the 3D scan data provided by the 3D scanner (27).

5. Device according to any one of the foregoing claims, wherein the data supply station (6) can be connected to a/the machine data station (21) that is at a separate location from the maintenance and data supply stations by way of a communication link, and that is configured for providing said augmented reality data to the data supply station (6), wherein said machine data station (21) comprises a storage device for storing a plurality of augmented reality data and/or component data of a plurality of further components of the construction machine (2, 3) or a further construction machine, wherein the data supply station (6) and/or the machine data station (21) comprises selection means for selecting given augmented reality and/or component data set from the plurality of the stored component data on the basis of a data set request sent by the maintenance station (7).

6. Device according to any one of the foregoing claims, wherein the identification device (11) comprises a code reader, in particular a bar code reader, for reading a marking applied to the component (19) to be repaired.

7. Device according to any one of the foregoing claims, wherein the augmented reality device (9) comprises control means for continuously or cyclically adapting the image of the mounting environment of the component (19) to be repaired and/or maintained shown on the display to the real-time repair status of the construction machine (2), wherein said control means being so configured that as the repair and/or maintenance continues, in the image of the mounting environment the components that have been disassembled gradually cease to be displayed and/or newly assembled components are being displayed.

8. Device according to any one of the foregoing claims, wherein a camera (10) that is directed at the construction machine (2, 3) to be repaired is provided for providing the image to be shown on the display of the augmented reality device (9) in the form of a live image and/or a recorded image.

9. Device according to any one of the foregoing claims, wherein the display of the augmented reality device (9) and/or the camera (10) are integrated into data glasses (15) to be worn by the worker (13).

10. Device according to any one of the foregoing claims, wherein the augmented reality device (9) comprises a CAD data interface and the data supply station (6) is configured for providing the maintenance station (7) with CAD data on the component (19) to be repaired and/or on the mounting environment of the component (19), on the basis of which the augmented reality device (9) displays a CAD representation of the component (19) and/or its mounting environment.

11. Device according to any one of the foregoing claims, wherein the data supply station (6) and/or the machine data station (21) comprises a time-blocking device that is configured for limiting the providing of data by the data supply station (6) and/or by the machine data station (21) to a predetermined time period.

12. Device according to any one of the foregoing claims, wherein the data supply station (6) comprises an authentication module for checking the authorization of the maintenance station (7) to receive given component data and the machine data station (21) comprises an authentication module for checking the authorization of the data supply station (6) to obtain predetermined component data, wherein the authentication module of the data supply station (6) and the authentication module of the machine data station (21) are designed differently and/or are configured for checking different authentication criteria, in particular encoding and/or keys.

13. Device according to any one of the foregoing claims, wherein the machine data station (21) comprises a data cloud (22) in which component data of a plurality of components of a plurality of construction machines are stored.

14. Method for maintaining and/or repairing a construction machine (2, 3) at the jobsite of the construction machine, using a mobile maintenance station (7) that can be placed at the jobsite of the construction machine, comprising a 3D printer (29) for printing replacement parts (19) for the construction machine (2, 3) on the basis of component data and/or a mobile display device (8) for displaying repair information on the construction machine (2, 3) on the basis of component data, wherein an image of the component (19) to be repaired and of the mounting environment of the component to be repaired is shown on a display by means of an augmented reality device (9), and a mounting position of the component (19) to be repaired in the mounting environment is overlaid onto the displayed image on the display, wherein augmented reality data for overlaying the component information and/or position in the mounting environment is transmitted to the maintenance station (7) by way of a communication link from a data supply station (6) in response to a request from the maintenance station, wherein the mounting position of the component (19) to be repaired in the mounting environment is overlaid onto the displayed image on the display, depending on the augmented reality and/or component data transmitted from the data supply station (6) to the maintenance station (7), **characterized in that** a component (19) on the construction machine (2) that requires to be repaired and/or maintained is identified by means of an identification device (11) on the maintenance station (7) and/or the data supply station (6), wherein images of the component to be repaired taken by a camera (10) are evaluated and the component (19) is identified from these image data with an image evaluation device, wherein the image evaluation device identifies the component by means of color evaluation means on the basis of a color of the component and/or by means of geometry evaluation means on the basis of a diameter of the component and/or a dimension of at least one main axis of extension and/or a geometry dimension of the component.

15. Method according to the foregoing claim, wherein the said augmented reality data is provided to the data supply station (6) by way of a communication link from a machine data station (21) that is at a separate location from the maintenance and data supply stations (6, 7), wherein, in addition to the said augmented reality data, a plurality of augmented reality and component data relating to further components of the construction machine (2, 3) or of another construction machine are kept ready in a storage device at the said machine data station (21), wherein a given augmented reality data set for the component (19) to be repaired is selected by the data supply station (7) and/or the machine data station (21) from the plurality of stored augmented reality and component data on the basis of a data set request sent by the maintenance station and is provided to the maintenance station, wherein the providing of the augmented reality data to the augmented reality device (8) is initiated automatically, depending on a ready-for-replacement signal, which ready-for-replacement signal is ascertained by a residual service life prediction device, depending on operating data recorded by sensors and/or recorded component characteristics.

## Revendications

1. Dispositif pour l'entretien et/ou la réparation d'une machine de construction (2, 3) avec une station d'entretien mobile (7) pouvant être placée sur le lieu d'utilisation de la machine de construction, comprenant une imprimante 3D (29) pour imprimer des pièces de rechange (19) pour la machine de construction (2, 3) à l'aide de données de composant et/ou un dispositif d'affichage mobile (8) pour afficher des informations de réparation sur la machine de construction (2, 3) à l'aide de données de composant, qui comprend un appareil de réalité augmentée (9), qui affiche sur un écran une image du composant (19) à réparer et de l'environnement d'installation du composant à réparer et insère une position d'installation du composant (19) à réparer dans l'environnement d'installation dans l'image affichée sur l'écran, une station d'alimentation en données (6) pouvant être connectée à la station d'entretien (7) par l'intermédiaire d'une liaison de communication et étant configurée pour fournir à la station d'entretien (7) des données de réalité augmentée pour insérer les informations et/ou la position du composant dans l'environnement d'installation, et la station d'entretien (7) étant configurée pour insérer la position d'installation du composant (19) à réparer dans l'environnement d'installation dans l'image affichée sur l'écran en fonction des données de réalité augmentée et/ou de composant obtenues à partir de la station d'alimentation en données (6), **caractérisé en ce que** la station d'entretien (7) et/ou la station d'alimentation en données (6) présentent un appareil d'identification (11) pour identifier un composant (19) nécessitant une réparation et/ou un entretien sur la machine de construction (2) avec un appareil d'évaluation d'image pour évaluer des images du composant à réparer prises par une caméra (10) et identifier le composant (19) à partir de ces données d'image, l'appareil d'évaluation d'image présentant des moyens d'évaluation de couleur pour identifier le composant à l'aide d'une couleur du composant et/ou des moyens d'évaluation de géométrie pour identifier le composant à l'aide d'un diamètre du composant et/ou d'une dimension d'au moins un axe d'extension principal et/ou d'une mesure géométrique du composant.

2. Dispositif selon la revendication précédente, une station d'alimentation en données (6) localement distincte de la station d'entretien étant prévue, qui peut être reliée à la station d'entretien (7) par l'intermédiaire d'une liaison de communication et qui est configurée pour fournir à la station d'entretien (7) des données d'impression 3D pour l'impression de la pièce de rechange, et la station d'entretien (7) étant configurée pour imprimer la pièce de rechange (19) par couches à l'aide des données d'impression 3D reçues à partir de la station d'alimentation en données (6),
la station d'alimentation en données (6) pouvant être reliée par l'intermédiaire d'une liaison de communication à une station de données de machine (21) localement distincte des stations d'entretien et d'alimentation en données, qui est configurée pour fournir lesdites données d'impression 3D à la station d'alimentation en données (6), ladite station de données de machine (21) comprenant un appareil de stockage dans lequel sont stockées, en plus desdites données d'impression 3D, une pluralité de données de composants concernant à d'autres composants de la machine de construction (2, 3) ou d'une autre machine de construction, la station d'alimentation en données (6) et/ou la station de données de machine (21) présentant des moyens de sélection pour sélectionner un ensemble de données de composant déterminé parmi la pluralité de données de composant stockées, sur la base d'une demande d'ensemble de données transmise par la station d'entretien.

3. Dispositif selon l'une quelconque des revendications précédentes, l'imprimante 3D (29) présentant une tête d'application déplaçable, notamment déplaçable sur trois axes, pour l'application par couches de matériaux pulvérulents et/ou pâteux et/ou liquides et une tête d'irradiation pour irradier les couches de matériaux appliquées avec un faisceau laser ou un faisceau d'électrons ou un faisceau de plasma pour la fusion ou la solidification et/ou le durcissement par couches et/ou pour la réaction chimique de la couche de matériau afin de former respectivement une couche durcie.

4. Dispositif selon l'une quelconque des revendications précédentes, la station d'entretien (7) présentant un scanner 3D (27) pour détecter un composant (19) à réparer et fournir des données de balayage 3D qui caractérisent ledit composant (19), et l'imprimante 3D (29) étant configurée pour imprimer une pièce de rechange (19) pour ledit composant (19) sur la base des données de balayage 3D fournies par le scanner 3D (27).

5. Dispositif selon l'une quelconque des revendications précédentes, la station d'alimentation en données (6) pouvant être connectée par l'intermédiaire d'une liaison de communication à une/la station de données de machine (21) localement distincte des stations d'entretien et d'alimentation en données, qui est configurée pour fournir lesdites données de réalité augmentée à la station d'alimentation en données (6), ladite station de données de machine (21) présentant un appareil de stockage pour stocker une pluralité de données de réalité augmentée et/ou de composant d'une pluralité d'autres composants de la machine de construction (2, 3) ou d'une autre machine de construction, la station d'alimentation en données (6) et/ou la station de données de machine (21) présentant des moyens de sélection pour sélectionner un ensemble de données de réalité augmentée et/ou de de composant déterminé parmi la pluralité de données de composant stockées, sur la base d'une demande d'ensemble de données transmise par la station d'entretien (7).

6. Dispositif selon l'une quelconque des revendications précédentes, l'appareil d'identification (11) présentant un lecteur de code pour lire une marquage attachée sur le composant (19) à réparer, notamment un lecteur de code à barres.

7. Dispositif selon l'une quelconque des revendications précédentes, l'appareil de réalité augmentée (9) présentant des moyens de commande pour l'adaptation continue ou cyclique de l'image de l'environnement d'installation du composant (19) à réparer et/ou à entretenir affichée sur l'écran à l'état réel de réparation de la machine de construction (2), lesdits moyens de commande étant configurés pour, au fur et à mesure de l'avancement de la réparation et/ou de l'entretien, ne plus afficher dans l'image de l'environnement d'installation les composants démontés peu à peu et/ou afficher les composants nouvellement montés.

8. Dispositif selon l'une quelconque des revendications précédentes, une caméra (10) orientée vers la machine de construction (2, 3) à réparer étant prévue pour fournir l'image à afficher sur l'écran de l'appareil de réalité augmentée (9) sous forme d'image en direct et/ou d'image enregistrée.

9. Dispositif selon l'une quelconque des revendications précédentes, l'écran de l'appareil de réalité augmentée (9) et/ou la caméra (10) étant intégrés dans des lunettes de données (15) à porter par l'opérateur (13).

10. Dispositif selon l'une quelconque des revendications précédentes, l'appareil de réalité augmentée (9) présentant une interface de données CAO et la station d'alimentation en données (6) étant configurée pour fournir à la station d'entretien (7) des données CAO relatives au composant (19) à réparer et/ou à l'environnement d'installation du composant (19), à l'aide desquelles l'appareil de réalité augmentée (9) affiche une représentation CAO du composant (19) et/ou de son environnement d'installation.

11. Dispositif selon l'une quelconque des revendications précédentes, la station d'alimentation en données (6) et/ou la station de données de machine (21) comprenant un appareil de verrouillage temporel qui est configuré pour limiter la fourniture des données par la station d'alimentation en données (6) et/ou par la station de données de machine (21) à une période de temps prédéterminée.

12. Dispositif selon l'une quelconque des revendications précédentes, la station d'alimentation en données (6) présentant un module d'authentification pour vérifier l'autorisation de la station d'entretien (7) à obtenir des données de composant déterminées, et la station de données de machine (21) présentant un module d'authentification pour vérifier l'autorisation de la station d'alimentation en données (6) à obtenir des données de composant prédéterminées, le module d'authentification de la station d'alimentation en données (6) et le module d'authentification de la station de données de machine (21) étant conçus différemment et/ou étant configurés pour vérifier des critères d'authentification différents, notamment des codages et/ou des clés.

13. Dispositif selon l'une quelconque des revendications précédentes, la station de données de machine (21) comprenant un nuage de données (22) dans lequel sont stockées des données de composant d'une pluralité de composants d'une pluralité de machines de construction.

14. Procédé d'entretien et/ou de réparation d'une machine de construction (2, 3) sur le lieu d'utilisation de la machine de construction au moyen d'une station d'entretien (7) mobile, placée sur le lieu d'utilisation de la machine de construction, comprenant une imprimante 3D (29) pour imprimer des pièces de rechange (19) pour la machine de construction (2, 3) à l'aide de données de composant et/ou un dispositif d'affichage (8) mobile pour afficher des informations de réparation sur la machine de construction (2, 3) à l'aide de données de composant ; au moyen d'un appareil de réalité augmentée (9), une image du composant (19) à réparer et de l'environnement d'installation du composant à réparer étant affichée sur un écran et une position d'installation du composant (19) à réparer dans l'environnement d'installation étant insérée dans l'image affichée sur l'écran, des données de réalité augmentée étant transmises à la station d'entretien (7) par l'intermédiaire d'une liaison de communication à partir d'une station d'alimentation en données (6) en réponse à une demande de la station d'entretien pour insérer les informations et/ou la position du composant dans l'environnement d'installation, la position d'installation du composant (19) à réparer dans l'environnement d'installation étant insérée dans l'image affichée sur l'écran en fonction des données de réalité augmentée et/ou de composant transmises par la station d'alimentation en données (6) à la station d'entretien (7), **caractérisé en ce qu'**un composant (19) nécessitant une réparation et/ou un entretien est identifié sur la machine de construction (2) au moyen d'un appareil d'identification (11) au niveau de la station d'entretien (7) et/ou de la station d'alimentation en données (6), des images du composant à réparer prises par une caméra (10) étant évaluées avec un appareil d'évaluation d'image et le composant (19) étant identifié à partir de ces données d'image, l'appareil d'évaluation d'image identifiant le composant au moyen de moyens d'évaluation de couleur à l'aide d'une couleur du composant et/ou au moyen de moyens d'évaluation de géométrie à l'aide d'un diamètre du composant et/ou d'une dimension d'au moins un axe d'extension principal et/ou d'une mesure géométrique du composant.

15. Procédé selon la revendication précédente, lesdites données de réalité augmentée étant fournies à la station d'alimentation en données (6) par l'intermédiaire d'une liaison de communication à partir d'une station de données de machine (21) localement distincte des stations d'entretien et d'alimentation en données (6, 7), une pluralité de données de réalité augmentée et de composant relatives à d'autres composants de la machine de construction (2, 3) ou d'une autre machine de construction étant fournies dans un appareil de stockage à ladite station de données de machine (21) en plus desdites données de réalité augmentée, un ensemble de données de réalité augmentée déterminé pour le composant (19) à réparer étant sélectionné parmi la pluralité de données de réalité augmentée et de composant stockées par la station d'alimentation en données (7) et/ou la station de données de machine (21) sur la base d'une demande d'ensemble de données transmise par la station d'entretien et étant fourni à la station d'entretien, la fourniture des données de réalité augmentée à l'appareil de réalité augmentée (8) étant automatiquement déclenchée en fonction d'un signal de maturité d'échange, lequel signal de maturité d'échange étant déterminé par un appareil de prédiction de durée de vie restante en fonction de données de fonctionnement détectées par des capteurs et/ou de caractéristiques de composant détectées.
